(19) Europäisches Patentamt / European Patent Office / Office européen des brevets

(11) EP 2 551 368 A1

(12) EUROPEAN PATENT APPLICATION
published in accordance with Art. 153(4) EPC

(43) Date of publication:
30.01.2013 Bulletin 2013/05

(51) Int Cl.:
$C23C\ 4/04$ (2006.01)  $C03B\ 23/03$ (2006.01)
$C03B\ 35/12$ (2006.01)  $C22C\ 29/06$ (2006.01)
$C22C\ 29/08$ (2006.01)  $C23C\ 4/06$ (2006.01)
$C23C\ 4/10$ (2006.01)

(21) Application number: 11759381.4

(22) Date of filing: 22.03.2011

(86) International application number:
PCT/JP2011/056825

(87) International publication number:
WO 2011/118576 (29.09.2011 Gazette 2011/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 23.03.2010 JP 2010066500

(71) Applicant: Asahi Glass Company, Limited
Tokyo 100-8405 (JP)

(72) Inventors:
• ISHIKAWA, Yasunari
Tokyo 100-8405 (JP)
• HAMASHIMA, Kazuo
Tokyo 100-8405 (JP)

(74) Representative: Müller-Boré & Partner
Patentanwälte
Grafinger Straße 2
81671 München (DE)

(54) SPRAYED COATING OF JIG FOR PRODUCING GLASS SHEET, AND JIG FOR PRODUCING GLASS SHEET

(57) To provide a thermal sprayed coating of a jig for producing glass having favorable wear resistance and lubricity at high temperature of at least the strain point of a glass sheet.

A thermal sprayed coating of a jig for producing a glass sheet, to be used for a jig for producing glass to be in contact with a glass sheet at a temperature of at least the strain point, which comprises tungsten carbide; at least one metal carbide selected from the group consisting of titanium carbide, zirconium carbide, hafnium carbide, niobium carbide, tantalum carbide, chromium carbide and molybdenum carbide; a metal containing Ni; and inevitable impurities, and a jig for producing a glass sheet comprising the thermal sprayed coating.

Fig. 4

MASS INCREASE (g/cm$^2$) vs VOLUME RATIO (vol%) OF WC

EP 2 551 368 A1

**Description**

TECHNICAL FIELD

The present invention relates to a thermal sprayed coating of a jig for producing a glass sheet, and a jig for producing a glass sheet.

BACKGROUND ART

In a process for producing a glass sheet, a jig to be in contact with a glass sheet at high temperature of at least the strain point is required to have high hardness and favorable wear resistance and to have a good lubricity at such high temperature as well, so as not to damage the glass sheet.

In Claim 1 of the following Patent Document 1, a mold release coating for a mold having a high hardness to be used for a mold for producing a glass formed product is disclosed, and it is disclosed that this mold release coating comprises a metal carbide selected from the group consisting of chromium carbide, tungsten carbide, hafnium carbide, niobium carbide and a heat resistant metal carbide and a metal binding agent selected from the group consisting of nickel, cobalt, iron, chromium and an alloy thereof. However, a specifically disclosed coating substance is only one comprising from 60 to 90 wt% of chromium carbide and from 10 to 40 wt% of nickel-chromium.

Patents Documents 2 and 3 relate to a feedstock powder for a thermal sprayed coating which imparts wear resistance and corrosion resistance to a rigid material used at room temperature, and in a Comparative Example, a powder for thermal spraying comprising 73 wt% of tungsten carbide, 20 wt% of chromium carbide and 7 wt% of nickel is disclosed.

PRIOR ART DOCUMENTS

PATENT DOCUMENTS

Patent Document 1: JP-A-2000-178034
Patent Document 2: JP-A-2002-173758
Patent Document 3: JP-A-2002-220652

DISCLOSURE OF INVENTION

TECHNICAL PROBLEM

In Patent Document 1, tungsten carbide is merely disclosed as one choice from metal carbides, and it failed to specifically disclose a coating containing it.

The powder for thermal spraying as disclosed in Patent Documents 2 and 3 is to be applicable to a rigid material used at room temperature, and its frictional coefficient and lubricity at high temperature are not considered at all.

Under these circumstances, the object of the present invention is to provide a thermal sprayed coating of a jig for producing a glass sheet having favorable wear resistance and lubricity, to be used for a glass sheet at high temperature of at least the strain point, and the jig for producing a glass sheet comprising the thermal sprayed coating.

SOLUTION TO PROBLEM

To achieve the above object, the thermal sprayed coating of a jig for producing a glass sheet of the present invention is a thermal sprayed coating to be used for a jig for producing a glass sheet to be in contact with a glass sheet at a temperature of at least the strain point, which comprises (1) tungsten carbide, (2) at least one metal carbide selected from the group consisting of titanium carbide, zirconium carbide, hafnium carbide, niobium carbide, tantalum carbide, chromium carbide and molybdenum carbide, (3) a metal containing Ni, and (4) inevitable impurities.

The present invention further provides a thermal sprayed coating to be used for a jig for producing glass to be in contact with a glass sheet at a temperature of at least the strain point, which is formed from a material containing (1) tungsten carbide, (2) at least one metal carbide selected from the group consisting of titanium carbide, zirconium carbide, hafnium carbide, niobium carbide, tantalum carbide, chromium carbide and molybdenum carbide and (3) a metal containing Ni, by a thermal spraying method.

It is preferred that the ratio of (1) tungsten carbide on the surface is from 5 to 50 area%.

It is preferred that the content of (3) metal containing Ni is from 3 to 30 vol%.

It is more preferred that the content of (1) tungsten carbide is from 5 to 45 vol%, and the content of (3) metal containing Ni is from 5 to 25 vol%.

It is preferred that the content of (1) tungsten carbide is from 5 to 45 vol%, the content of (3) metal containing Ni is from 5 to 35 vol%, and the content of (2) metal carbide is the rest after removing the content of tungsten carbide, the content of the metal containing Ni and the content of the inevitable impurities.

It is preferred that (2) metal carbide contains chromium carbide, and the content of $Cr_2O_3$ as (4) inevitable impurities is at most 2 vol%.

It is preferred that the thickness of the thermal sprayed coating is from 50 to 500 $\mu$m.

The present invention provides a jig for producing a glass sheet, which comprises the thermal sprayed coating of the present invention.

The jig for producing a glass sheet of the present invention is suitable for a production apparatus for forming a glass sheet comprising soda lime glass into a glass sheet having a curved shape.

ADVANTAGEOUS EFFECTS OF INVENTION

According to the present invention, a thermal sprayed coating of a jig for producing a glass sheet having favorable wear resistance and lubricity to be used for a glass sheet at high temperature of at least the strain point, and a jig for producing a glass sheet comprising the thermal sprayed coating, can be obtained. The jig for producing a glass sheet of the present invention is useful as a production jig in a glass sheet processing apparatus to be used when a glass sheet is processed to have a curved shape, or as a production jig to be used to produce a glass sheet.

BRIEF DESCRIPTION OF DRAWINGS

Fig. 1 is a view schematically illustrating a method for producing a sintered product in Examples.
Fig. 2 is a view schematically illustrating a method for measuring the frictional coefficient in Examples.
Fig. 3 is a graph illustrating the results of a high temperature friction test in Examples.
Fig. 4 is a graph illustrating the results of an oxidation test in Examples.
Fig. 5 is a chart illustrating results of analysis of an oxide powder by means of X-ray diffraction in Examples.

DESCRIPTION OF EMBODIMENTS

The thermal sprayed coating of the present invention is to be used for a jig for producing a glass sheet to be in contact with a glass sheet at a temperature of at least the strain point, and comprises (1) tungsten carbide, (2) the following specific metal carbide, (3) a metal containing Ni, and (4) inevitable impurities in production. Further, the present invention provides a thermal sprayed coating formed from a material containing (1) tungsten carbide, (2) the following specific metal carbide and (3) a metal containing Ni, by a thermal spraying method. Here, tungsten carbide is a metal carbide but is not included in the specific metal carbide in the present invention.

The present invention is applicable to production of glass sheets having various compositions within a range not to impair the effects of the present invention. Particularly, it is suitably used for production of a glass sheet comprising soda lime glass to be used for building glass and safety glass for vehicles. The strain point and the softening point of soda lime glass vary depending on the composition, and for example, the strain point is about 510°C and the softening point is about 730°C.

The above specific metal carbide is at least one member selected from the group consisting of titanium carbide, zirconium carbide, hafnium carbide, niobium carbide, tantalum carbide, chromium carbide and molybdenum carbide. Such a specific metal carbide does not react with a glass sheet, mainly has a role in the hardness of the thermal sprayed coating and contributes to an improvement in the wear resistance.

Each of the specific metal carbides may be a mixture of two or more differing in the compositional ratio. Main compounds of each metal carbide may be $Cr_3C_2$, $Cr_7C_3$, $Cr_{23}C_6$ or the like in the case of chromium carbide, TiC in the case of titanium carbide, ZrC in the case of zirconium carbide, NbC in the case of niobium carbide, TaC in the case of tantalum carbide, MoC or $Mo_2C$ in the case of molybdenum carbide or HfC in the case of hafnium carbide. Further, in addition to the above compounds, a nonstoichiometric compound which is a compound having a compositional ratio which cannot be represented by a quantitative ratio, such as $Cr_xC_y$ in the case of chromium carbide, may be contained. In the above $Cr_xC_y$, x is from 3 to 23, and y is from 2 to 7.

The content of the above specific metal carbide in the thermal sprayed coating is the rest after removing the content of the tungsten carbide, the content of the metal containing Ni and the content of the inevitable impurities, as described hereinafter. The content of the specific metal carbide is preferably at least 25 vol%, more preferably at least 30 vol%, in order to obtain a sufficient hardness of the thermal sprayed coating.

Among the above specific metal carbides, chromium carbide is preferred in view of non-reactivity with a glass sheet and the oxidation resistance. It is preferred that at least 80 vol%, more preferably 100 vol%, of the specific metal carbides is chromium carbide.

In a case where the specific metal carbide is chromium carbide, the content of chromium carbide in the thermal sprayed coating is the rest after removing the content of the tungsten carbide, the content of the metal containing Ni and the content of the inevitable impurities, as described hereinafter. In such a case, in order to obtain a sufficient hardness of the thermal sprayed coating, the content of chromium carbide in the thermal sprayed coating is preferably at least 25 vol%, more preferably 30 vol%.

Further, chromium carbide is preferably $Cr_3C_2$ particularly in view of the stability of the coating. It is preferred that at least 80 vol%, more preferably 100 vol%, of chromium carbide is $Cr_3C_2$.

In a case where the specific metal carbide is $Cr_3C_2$, the content of $Cr_3C_2$ in the thermal sprayed coating is the rest after removing the content of the tungsten carbide, the content of the metal containing Ni and the content of the inevitable impurities, as described hereinafter. In such a case, in order to obtain a sufficient hardness of the thermal sprayed coating, the content of $Cr_3C_2$ in the thermal sprayed coating is preferably at least 25 vol%, more preferably at least 30 vol%.

Tungsten carbide in the present invention generally means WC, $W_2C$ and the like.

Tungsten carbide has been considered to be a component which plays a role in the hardness of the thermal sprayed coating, like the other metal carbides, however, the present inventors have found that tungsten carbide contributes to an improvement in the lubricity of the thermal sprayed coating at high temperature. They have further found that if the content of tungsten carbide is too high, the wear resistance at high temperature is decreased.

That is, as shown in the after-mentioned Examples, if a thermal sprayed coating containing tungsten carbide is exposed to high temperature in an oxidizing atmosphere, the frictional coefficient at high temperature (for example, at least 450°C) is lowered, and the lubricity is improved. As the content of tungsten carbide increases, the frictional coefficient is further lowered. This is considered to be because when the thermal sprayed coating containing tungsten carbide is exposed to high temperature in an oxidizing atmosphere, a fine powder of an oxide containing tungsten (hereinafter referred to as an oxide powder) is formed on the surface of the film. It is considered that as the formed oxide powder is separated from the coating and is temporary attached to the surface of the coating film, and does not react with a glass sheet, it functions as a powder lubricant and contributes to an improvement in the lubricant of the thermal sprayed coating. The higher the content of tungsten carbide present on the surface of the thermal sprayed coating, the more the oxide powder is likely to be formed.

On the other hand, if formation of the oxide powder is too much, oxidation of the thermal sprayed coating tends to proceed, whereby the wear resistance is lowered, and consumption of the thermal sprayed coating tends to be accelerated.

Accordingly, by incorporating the specific metal carbide and tungsten carbide in the thermal sprayed coating, it is possible to obtain the wear resistance and the lubricity to a glass sheet at high temperature of at least the strain point in a well balanced manner.

In order to sufficiently obtain the effect of improving the lubricity while suppressing a decrease in the wear resistance by formation of the oxide powder, "the ratio of tungsten carbide on the surface" which represents the proportion of the area where tungsten carbide is present to the surface of the thermal sprayed coating is preferably from 5 to 50 area%.

As shown in the after-mentioned Examples, the ratio of the tungsten carbide on the surface correlates with the content (unit: vol%) of tungsten carbide in the thermal sprayed coating on the volume basis with a substantially close proportion. Accordingly, by adjusting the content of tungsten carbide in the thermal sprayed coating, the ratio of tungsten carbide on the surface can be controlled. The content of tungsten carbide in the thermal sprayed coating can be controlled by the content in the feedstock powder.

In order to obtain favorable wear resistance and favorable lubricity in a well balanced manner, the content of tungsten carbide in the thermal sprayed coating is preferably from 5 to 45 vol%, more preferably from 8 to 40 vol%.

Tungsten carbide is preferably WC particularly in view of toughness of the coating. It is preferred that at least 95 vol%, more preferably 100 vol%, of tungsten carbide is WC.

In a case where tungsten carbide is WC, the ratio of WC on the surface is preferably from 5 to 50 area% in order to sufficiently obtain the effect of improving the lubricity while suppressing a decrease in the wear resistance by formation of the oxide powder.

Further, the content of WC in the thermal sprayed coating is preferably from 5 to 45 vol%, more preferably from 8 to 40 vol%, in order to obtain favorable wear resistance and favorable lubricity in a well balanced manner.

In the thermal sprayed coating of the present invention, the metal contributes to the film forming properties, the toughness, the peeling resistance and the like as a binder. The metal in the present invention contains at least Ni. In addition to Ni, it may contain at least one member selected from the group consisting of Co, Cr, Fe, Al and Si. When Ni is contained, the binder will be well solid-solved in the metal carbide, such being preferred.

In order to obtain favorable film forming properties, the content of the metal in the thermal sprayed coating is preferably from 3 to 40 vol%. If the content of the metal is high, the forming properties of the thermal sprayed coating tend to be high.

Accordingly, in view of the balance between the wear resistance and the lubricity, when the content of tungsten carbide in the thermal sprayed coating is within the above range of from 5 to 45 vol%, more preferably within a range of from 8 to 40 vol%, the content of the metal in the thermal sprayed coating is preferably from 3 to 40 vol%, more preferably from 5 to 35 vol%.

Further, it is preferred that at least 50 vol%, more preferably at least 80 vol%, of the metal is Ni.

In a case where the metal in the present invention is Ni, in order to obtain favorable film forming properties, the content of Ni in the thermal sprayed coating is more preferably from 3 to 40 vol%. Accordingly, when the content of tungsten carbide in the thermal sprayed coating is within the above range of from 5 to 45 vol%, more preferably within a range of from 8 to 40 vol%, the content of Ni in the thermal sprayed coating is preferably from 3 to 40 vol%, more preferably from 5 to 35 vol%.

The inevitable impurities in the thermal sprayed coating may, for example, be metal oxides, such as $Cr_2O_3$, NiO and $NiWO_4$, although they vary depending upon the method for producing the materials, the method for producing the thermal sprayed coating, the production conditions and the like. The amount of the inevitable impurities in the thermal sprayed coating is preferably smaller.

Particularly, $Cr_2O_3$ which may form when the metal carbide contains chromium carbide adheres to a glass sheet strongly, and accordingly the content of $Cr_2O_3$ in the thermal sprayed coating is preferably at most 2 vol%, more preferably at most 1 vol%.

The oxides such as $Cr_2O_3$ which form as the inevitable impurities at the time of thermal spraying can be reduced, for example, by adopting conditions under which oxidation hardly occurs, as the conditions for producing the thermal sprayed coating.

The thermal sprayed coating of the present invention can be formed from a feedstock powder by thermal spraying by a known method.

The thermal spraying method may be an oxy-fuel spraying method or an electrical spraying method. The oxy-fuel spraying method may be a gas flame spraying method, and the electrical spraying method may be an arc spraying method, a plasma spraying method, a water-stabilized plasma spraying method or a vacuum plasma spraying method.

Particularly, a high velocity oxygen fuel spraying (HVOF) method is preferred as a thermal spraying method to suppress formation of oxides such as $Cr_2O_3$ as inevitable impurities, since the combustion flame temperature is not so high as in the plasma spraying method, whereby oxidation of the thermal sprayed coating hardly occurs.

The feedstock powder is preferably a powder mixture of a powder of the metal carbide, a powder of tungsten carbide and the metal powder. The mixing ratio of the powders is set depending upon the composition of the thermal sprayed coating to be obtained. Preparation of the feedstock powder can be carried out by optionally using a known method for preparing a feedstock powder for thermal spraying.

When particles of each material by itself before preparation of the feedstock powder are regarded as a powder before mixing, the average particle size of the powder before mixing of tungsten carbide is preferably from 1 to 5 $\mu$m, more preferably from 1.5 to 2.5 $\mu$m. If the average particle size of the powder before mixing of tungsten carbide is too small, the particle size in the form of an oxide powder is also small, and no sufficient effect as a powder lubricant will be obtained. On the other hand, if the average particle size is large, the oxide powder tends to be fragile and the powder lubricant effect will be reduced, and if it is too large, preparation of the powder of tungsten carbide itself tends to be difficult.

Here, the average particle size of the powder before mixing of a material means an average particle size of particles which are not aggregated, adjusted by a thermal spraying powder maker. The average particle size of the powder before mixing of a material can be measured by a known laser diffraction method, and in the after-mentioned Examples, the average particle size of the powder before mixing of tungsten carbide was measured, with respect to particles smaller than about 1 $\mu$m with the boundary at about 1 $\mu$m, by a BET method using Monosorb manufactured by Quantachrome Instruments, and with respect to particles larger than about 1 $\mu$m, by a Fisher method using Fisher Scientific Sizer manufactured by Thermo Fisher Scientific Inc.

Further, the average particle size of the feedstock powder prepared by mixing the respective materials is preferably about from 10 to 50 $\mu$m. Further, the value of the average particle size of the feedstock powder after mixing in this specification is a value obtained by a known laser diffraction method.

The conditions for thermal spraying are properly selected depending upon the thermal spraying machine, the method for preparing the material, the particle size distribution, the combustion fuel and the like. Prior to the thermal spraying step, known pretreatments such as roughening of a substrate, cleaning and preheating may be carried out as the case requires. Further, after the thermal spraying step, known aftertreatments such as heat treatment of the thermal sprayed coating and sealing may be carried out as the case requires.

With respect to the thickness of the thermal sprayed coating of the present invention, if it is too thin, the hardness and the life of the coating will not be obtained, and although the thicker the coating, the longer the life of the coating, if it is too thin, it may be broken. From these viewpoints, the thickness of the thermal sprayed coating is preferably from 50 to 500 $\mu$m, more preferably from 200 to 300 $\mu$m.

A substrate on which the thermal sprayed coating of the present invention is to be formed is properly selected depending upon the aimed jig for producing glass. For example, in the case of a transfer roll or a transfer mold to transfer a glass sheet to subject a glass sheet to bending or reinforcing, or a bending roll or a pressing mold to subject a glass sheet to bending, an austenite stainless steel or a heat resistant alloy such as a Ni-based alloy may suitably be used.

<Jig for producing glass sheet>

The jig for producing a glass sheet of the present invention comprises the thermal sprayed coating of the present invention. In a case where the jig for producing a glass sheet comprises a multilayer coating, the thermal sprayed coating of the present invention is preferably the outermost layer.

As the jig for producing a glass sheet, various jigs can be applicable so long as they are jigs to be in contact with a glass sheet at a temperature of at least the strain point (for example, a temperature of at least 500°C) in the process for producing a glass sheet. Such jigs may, for example, be a pressing mold, a forming roll, a transfer roll and a transfer mold.

As the forming step of forming a glass sheet to have a desired curved shape, a method of heating a glass sheet to a temperature in the vicinity of the softening point which is higher than the strain point, and bringing it into contact with a pressing mold to form it to a three dimensional curved shape, is common. In this forming step, usually, pressing and transfer are carried out while the peripheral portion of the glass sheet is in contact with the surface of the pressing mold. Accordingly, when the thermal sprayed coating of the present invention is applied to the surface of the pressing mold to be in contact with the periphery of the glass sheet, the scratch resistance of the mold by the periphery of the glass sheet can be reduced, whereby particularly significant effects can be expected.

Further, a glass sheet having a curved shape is mainly used for building glass and safety glass for vehicles, and it usually comprises soda lime glass. With the thermal sprayed coating of the present invention, favorable wear resistance and lubricity can be achieved at high temperature in the vicinity of the softening point (about 730°C) of soda lime glass, and accordingly it is particularly suitable for a jig for producing a glass sheet comprising soda lime glass and having a curved shape.

EXAMPLES

Now, the present invention will be described in further detail with reference to Examples. However, it should be understood that the present invention is by no means restricted to such specific Examples.

The thermal sprayed coating is one formed by heating and melting a feedstock powder and spraying it on a substrate, and has substantially the same composition and structure as a sintered product obtained by sintering the same feedstock powder. In the following Examples, evaluation was carried out by using a sintered product obtained by sintering a feedstock powder having a composition as shown in Table 1 in vacuum.

As a usual thermal sprayed coating is formed in an oxidizing atmosphere, inevitable impurities by oxidation of the materials will form, but the amount of such inevitable impurities is very small, and their influences over the properties of the thermal sprayed coating are at negligible level.

Accordingly, each of the sintered products used in the following Examples has substantially the same properties as a thermal sprayed coating obtainable by thermal spraying of each feedstock powder having a composition as shown in Table 1. In Table 1, WC generally means tungsten carbide, and CrC generally means a chromium carbide compound, and as described above, compounds with various compositional ratios may be contained.

Further, in Table 2, evaluation was carried out by using a test specimen having a thermal sprayed coating practically formed on a metal substrate.

<Examples 1 to 6>

In a ball mill, a WC powder (manufactured by FUJIMI INCORPORATED, purity: about 99 mass%, average: about 1 $\mu$m) as tungsten carbide, a $Cr_3C_2$ powder (manufactured by FUJIMI INCORPORATED, purity: about 98 mass%, average: about 20 $\mu$m) as chromium carbide and a Ni powder (manufactured by FUJIMI INCORPORATED, purity: about 99 mass%, average: about 1 $\mu$m) as a metal were put in a mass ratio (unit: mass%) as identified in Table 1, and pulverized and mixed in the same volume of ethanol for 12 hours to obtain a powder mixture, which was used as a feedstock powder for a sintered product.

Example 6 is a Comparative Example in which no WC was contained.

Further, the mass ratio of the respective powders in the feedstock powder shown in Table 1 is set considering the densities of the respective powders, so that the composition after sintering satisfied the volume ratio (aimed composition) of the sintered product as shown in Table 1.

Then, the obtained feedstock powder was subjected to liquid phase sintering in vacuum by a spark plasma sintering method (SPS method) to prepare a sintered product. By the liquid phase sintering in vacuum, substantially no impurities will form at the time of sintering, and a sintered product having substantially the same composition as the aimed composition will be obtained. Further, as the metal carbide is solid-solved in the metal binder, the same structure as the thermal sprayed coating will be obtained.

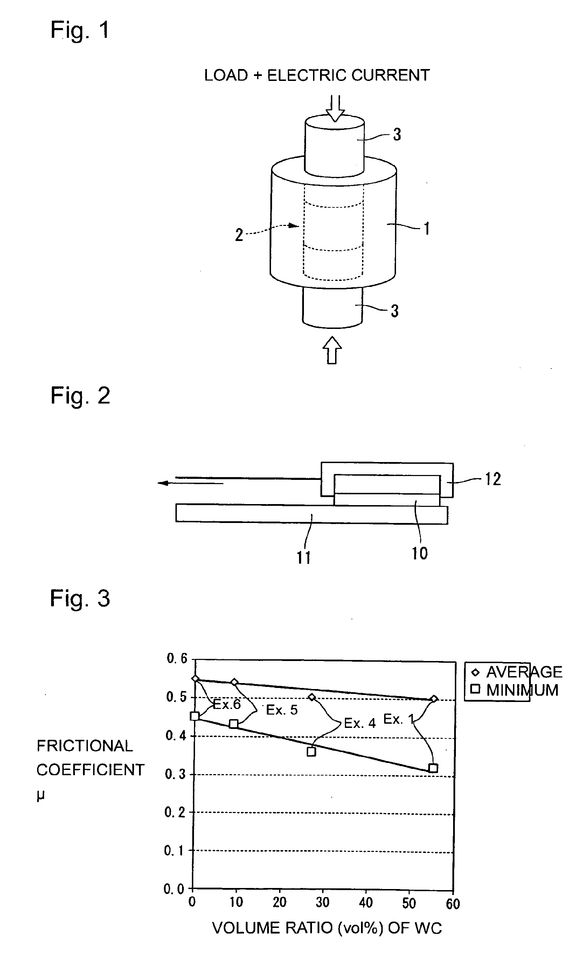

That is, as shown in Fig. 1, a tubular die 1 made of carbon was filled with a feedstock powder 2, and an electric current was applied while applying a load by a pair of pressure axes 3 to carry out sintering. The sintering temperature was 1,150°C and the load was 7.5 MPa. In such a manner, a disk-shape sintered product having a diameter of 15 mm and a thickness of 3 mm was obtained.

<Examples 7 and 8>

Using a feedstock powder prepared in the same manner as in Examples 1 to 6 in a mass ratio as identified in Table 2, a thermal sprayed coating was formed on a metal substrate by means of thermal spraying to prepare a test specimen. In Example 7, a WC powder which has an average particle size of the powder before mixing of tungsten carbide of about 1 $\mu$m which is the same as in Examples 1 to 6 was used, and in Example 8, a WC powder which has an average particle size of the powder before mixing of about 0.2 $\mu$m was used. As the metal substrate, a cylindrical metal substrate (28 mm in diameter $\times$ 10 mm in thickness) made of SUS304 was used, and as the thermal spraying method, a HVOF method was applied to form a thermal sprayed coating. As a thermal spraying apparatus, JP5000 manufactured by Tafa was used, and a thermal sprayed coating was formed under conventional thermal spraying conditions. The thickness is from 250 to 300 $\mu$m after polishing.

<Evaluation of properties>

The sintered products obtained in Examples 1 to 6 and the test specimens obtained in Examples 7 and 8 were evaluated by the following method.

[Ratio of WC on the surface]

The surface on the thermal sprayed coating side of each of sintered products and test specimens was polished by a water resistant paper and a buff to form a mirror surface, with respect to the surface, a backscattered electron image was taken by scanning electron microscope with a magnification of 500 (WD=15 mm), and the proportion (unit: area%) of the total surface area where WC was present to the total surface area of the photographed image (observed area) was calculated from the following formula (I). This value is regarded as the ratio of WC on the surface and is shown in Table 1.

$$\text{Ratio of WC on the surface} = \{(\text{total surface area where WC is present})/(\text{total surface area of photographed image})\} \times 100 \qquad (I)$$

In the backscattered electron image, WC is white, and accordingly by a binary image process of the image, the total surface area where WC is present can easily be obtained.

As shown in Table 1, the ratio of WC on the surface substantially correlates with the volume ratio (vol%) of WC in the sintered products and the test specimens.

[Table 1]

| | Feedstock powder | | | | | Sintered product | | | | | Ratio of WC on the surface (area%) |
|---|---|---|---|---|---|---|---|---|---|---|---|
| | Mass ratio (mass%) | | | | | Volume ratio (vol%) | | | | | |
| | WC | : | CrC | : | Ni | WC | : | CrC | : | Ni | |
| Ex. 1 | 73 | : | 20 | : | 7 | 55 | : | 35 | : | 10 | 61.8 |

(continued)

| | Feedstock powder | | | | | Sintered product | | | | | Ratio of WC on the surface (area%) |
|---|---|---|---|---|---|---|---|---|---|---|---|
| | Mass ratio (mass%) | | | | | Volume ratio (vol%) | | | | | |
| | WC | : | CrC | : | Ni | WC | : | CrC | : | Ni | |
| Ex. 2 | 64.5 | : | 27.5 | : | 7.5 | 45 | : | 45 | : | 10 | 47.3 |
| Ex. 3 | 56 | : | 36 | : | 8 | 36 | : | 54 | : | 10 | 38.0 |
| Ex. 4 | 45.5 | : | 45.5 | : | 9 | 27 | : | 63 | : | 10 | 29.4 |
| Ex. 5 | 18.5 | : | 70.5 | : | 11 | 9 | : | 81 | : | 10 | 12.0 |
| Ex. 6 | 0 | : | 88 | : | 12 | 0 | : | 90 | : | 10 | 0 |

[Table 2]

| | Feedstock powder | | | | | | | | | | Coating |
|---|---|---|---|---|---|---|---|---|---|---|---|
| | Mass ratio (mass%) | | | | | Volume ratio (vol%) | | | | | Ratio of WC on the surface (area%) |
| | WC | : | CrC | : | Ni | WC | : | CrC | : | Ni | |
| Ex. 7 | 35 | : | 32 | : | 33 | 21 | : | 44 | : | 35 | 21 |
| Ex. 8 | 35 | : | 32 | : | 33 | 21 | : | 44 | : | 35 | 21 |

[High temperature friction test]

With respect to the sintered products and the test specimens obtained in Examples 1, 4, 5, 6, 7 and 8, the frictional coefficient at high temperature was measured. That is, each of the sintered products and the test specimens was exposed to high temperature by holding it in an air atmosphere furnace in the air atmosphere at 700°C for 3 hours, and then gradually cooled to room temperature in the air atmosphere furnace over a period of 7 hours to prepare a sample for high temperature friction test. As shown in Fig. 2, the sintered product surface or the thermal sprayed coating surface of each sample 10 was brought into contact with a glass sheet 11, and the glass sheet 11 and the sample 10 were slid with each other in the air atmosphere at 600°C to measured the frictional coefficient.

In this test, as the glass sheet 11, a glass sheet comprising soda lime glass having a thickness of 3.5 mm, to be used as a glass substrate for an automobile, was used.

For measurement of the frictional coefficient, the sample 10 was placed on the glass sheet 11, a holder 12 was fitted on the upper portion of the sample 10 and a load was applied, and the frictional coefficient when the holder 12 was pulled in a direction in parallel with the surface of the glass sheet 11 to move the sample 10, was obtained.

As the measurement conditions, the load was 1.2N, the moving speed was 100 mm/min, and the moving length was 50 mm. Measurement was carried out three times with respect to one sample, and the average and the minimum were recorded.

The results of measurement with respect to the sintered products in Examples 1, 4, 5 and 6 are shown in the graph in Fig. 3. The horizontal axis represents the volume ratio (unit: vol%) of WC in the sample, and the vertical axis represents the frictional coefficient $\mu$.

Further, the measurement results of frictional coefficient with respect to the test specimens in Examples 7 and 8 are shown in Table 3.

[Oxidation test]

With respect to the sintered products obtained in Examples 1 to 6 and coating films obtained by separating only the thermal sprayed coatings from the test specimens obtained in Examples 7 and 8 (hereinafter the sintered products and the coating films will be referred to as samples), the mass change when exposed to high temperature in an oxidizing atmosphere was measured.

That is, the initial mass (unit: g) of each sample was measured, and then the sample was exposed to high temperature by holding it in an air atmosphere at 700°C for 3 hours. The mass (unit: g) of the sample after exposure to high temperature was measured, and the mass increase (unit: $g/cm^2$, hereinafter referred to simply as the mass increase) per unit surface area was obtained from the following formula (II):

$$\text{Mass increase} = (\text{mass after exposure to high temperature} - \text{initial mass}) / \text{Total surface area of sample} \qquad (II)$$

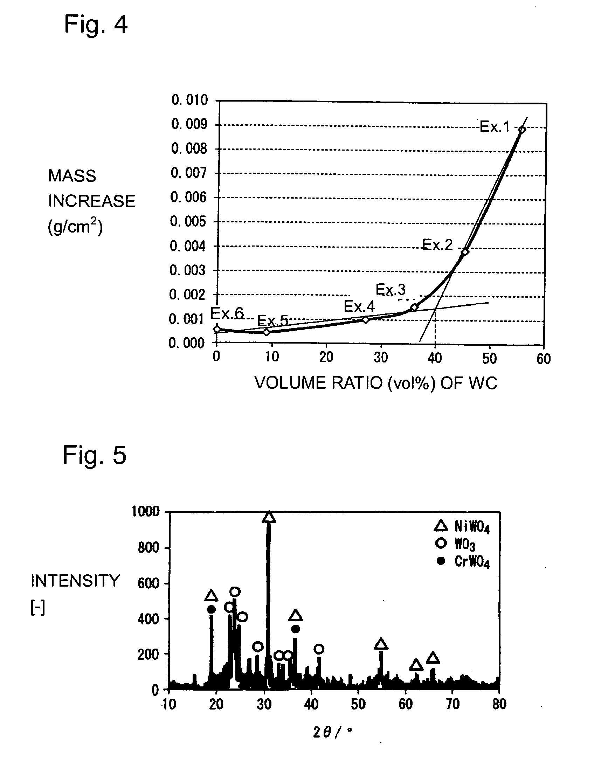

The results of measurement with respect to the sintered products in Examples 1 to 6 are shown in the graph in Fig. 4. The horizontal axis represents the volume ratio (unit: vol%) of WC in the sample (sintered product), and the vertical axis represents the mass increase (unit: $g/cm^2$).

Further, the results of measurement of the mass increase with respect to the test specimens in Examples 7 and 8 are shown in Table 3.

[Analysis of oxide powder]

The sintered product obtained in Example 1, in a state where it was brought into contact with a glass sheet comprising soda lime glass, was exposed to high temperature in an oxidizing atmosphere in the same manner as the above oxidation test, and the fine powder precipitated on the contact surface with the glass sheet was analyzed by an automatic X-ray diffraction apparatus (tradename: RINT2500) to identify the components. The obtained XRD pattern is shown in Fig. 5. In Fig. 5, the vertical axis represents the peak intensity, and the horizontal axis represents $2\theta/°$.

As evident from the results shown in Fig. 3, it is found that when WC is contained, the frictional coefficient at high temperature is lowered, and the frictional coefficient becomes lower as the content of WC is increased. Specifically, as compared with Example 6 which is a Comparative Example in which the thermal sprayed coating contains no WC, in Examples 1 to 5, the frictional coefficient was low, and the frictional coefficient is linearly reduced along with an increase in the content of WC.

Further, as evident from the results shown in Fig. 4, the mass increase by oxidation is larger as the content of WC is higher. Accordingly, it is found that the formation of the oxide powder is increased as the content of WC is higher. Particularly when the content of WC in the sintered product exceeds 40 vol%, the proportion of the mass increase by oxidation is increased, and if it exceeds 45 vol%, the mass increase is so large as at least about twice the mass increase when the content of WC is at most 40 vol%.

[Table 3]

|  | Frictional coefficient | Mass increase |
|---|---|---|
|  | μ | $g/cm^2$ |
| Ex. 7 | 0.38 | 0.0005 |
| Ex. 8 | 0.51 | 0.0001 |

Further, as shown in Fig. 5, the fine powder precipitated on the surface of the sintered product by oxidation substantially comprises the oxide powder containing tungsten. Further, reaction products with the glass sheet are not detected, and it is found that the oxide powder containing tungsten does not react with the glass sheet.

As mentioned above, when tungsten carbide is present on the surface of the thermal sprayed coating, this is oxidized to supply an oxide powder, whereby a powder lubricant effect is obtained. Further, when the content of tungsten carbide in the thermal sprayed coating is increased, the ratio of tungsten carbide on the surface in the thermal sprayed coating is increased, and the amount of supply of the oxide powder is also increased. As a result, the lubricant effect at high temperature is increased.

Further, in order to obtain excellent wear resistance of the thermal sprayed coating, the content of tungsten carbide in the thermal sprayed coating is preferably at most 45 vol%, more preferably at most 40 vol%.

As evident from the results in Tables 2 and 3, it is found that the frictional coefficient at high temperature is low when the average particle size of the powder before mixing of tungsten carbide is larger than 1 μm. On the other hand, if the average particle size is smaller than 1 μm, the frictional coefficient was increased, and the frictional coefficient was higher than in Example 6 which is a Comparative Example in which the thermal sprayed coating contained no WC. That is, it is found that in Example 8, no sufficient effect of WC as a powder lubricant can be obtained.

INDUSTRIAL APPLICABILITY

According to the present invention, a thermal sprayed coating of a jig for producing a glass sheet having favorable wear resistance and lubricity to a glass sheet at high temperature of at least the strain point, and a jig for producing a glass sheet comprising the thermal sprayed coating. The jig for producing a glass sheet of the present invention is particularly useful as a jig for producing a glass sheet, such as a glass sheet pressing mold, a glass sheet forming roll, a glass sheet transfer roll or a glass sheet transfer mold for processing facilities for e.g. bending or reinforcing a glass sheet.

The entire disclosure of Japanese Patent Application No. 2010-066500 filed on March 23, 2010 including specification, claims, drawings and summary is incorporated herein by reference in its entirety.

REFERENCE SYMBOLS

1:  die
2:  feedstock powder
3:  pressure axis
10:  sample
11:  glass sheet
12:  holder

**Claims**

1.  A thermal sprayed coating of a jig for producing a glass sheet,
    to be used for a jig for producing glass to be in contact with a glass sheet at a temperature of at least the strain point, which comprises
    (1) tungsten carbide, (2) at least one metal carbide selected from the group consisting of titanium carbide, zirconium carbide, hafnium carbide, niobium carbide, tantalum carbide, chromium carbide and molybdenum carbide, (3) a metal containing Ni, and (4) inevitable impurities.

2.  A thermal sprayed coating to be used for a jig for producing glass to be in contact with a glass sheet at a temperature of at least the strain point, which is formed from a material containing (1) tungsten carbide, (2) at least one metal carbide selected from the group consisting of titanium carbide, zirconium carbide, hafnium carbide, niobium carbide, tantalum carbide, chromium carbide and molybdenum carbide and (3) a metal containing Ni, by a thermal spraying method.

3.  The thermal sprayed coating according to Claim 1 or 2, wherein the *ratio of (1) tungsten carbide on the surface* is from 5 to 50 area%.

4.  The thermal sprayed coating according to any one of Claims 1 to 3, wherein the ratio of (1) tungsten carbide on the surface, as obtained by the following measurement method and the following formula, is from 5 to 50 area%:

    the surface on the thermal sprayed coating side of a sintered product or a test specimen is polished by a water resistant paper and a buff to form a mirror surface, with respect to the surface, a backscattered electron image is taken by a scanning electron microscope with a magnification of 500 (WD=15 mm), and the proportion (unit: area%) of the total surface area where WC is present to the total surface area of the photographed image (observed area) is calculated from the following formula (I):

$$\text{ratio of WC on the surface} = \{(\text{total surface area where WC is present})/(\text{total surface area of photographed image})\} \times 100 \quad (I)$$

5.  The thermal sprayed coating according to any one of Claims 1 to 4, wherein the content of (3) metal containing Ni is from 3 to 40 vol%.

6. The thermal sprayed coating according to any one of Claims 1 to 5, wherein the content of (1) tungsten carbide is from 5 to 45 vol%, and the content of (3) metal is from 5 to 35 vol%.

7. The thermal sprayed coating according to any one of Claims 1 to 6, wherein the content of (1) tungsten carbide is from 5 to 45 vol%, the content of (3) metal containing Ni is from 5 to 35 vol%, and the content of (2) metal carbide is the rest after removing the content of tungsten carbide, the content of the metal containing Ni and the content of the inevitable impurities.

8. The thermal sprayed coating according to any one of Claims 1 to 7, wherein (2) metal carbide contains chromium carbide, and the content of $Cr_2O_3$ as (4) inevitable impurities is at most 2 vol%.

9. The thermal sprayed coating according to any one of Claims 1 to 8, wherein the particle size of the powder before mixing of (1) tungsten carbide before it is mixed with the other materials, is from 1 to 5 $\mu$m.

10. The thermal sprayed coating according to any one of Claims 1 to 9, which has a thickness of from 50 to 500 $\mu$m.

11. A jig for producing a glass sheet, which comprises the thermal sprayed coating as defined in any one of Claims 1 to 10.

12. The jig for producing a glass sheet according to Claim 11, which is for a production apparatus for forming a glass sheet comprising soda lime glass into a glass sheet having a curved shape.

Fig. 1

LOAD + ELECTRIC CURRENT

Fig. 2

Fig. 3

Fig. 4

Fig. 5

## INTERNATIONAL SEARCH REPORT

| International application No. |
| --- |
| PCT/JP2011/056825 |

A. CLASSIFICATION OF SUBJECT MATTER
*C23C4/04*(2006.01)i, *C03B23/03*(2006.01)i, *C03B35/12*(2006.01)i, *C22C29/06*
(2006.01)i, *C22C29/08*(2006.01)i, *C23C4/06*(2006.01)i, *C23C4/10*(2006.01)i

According to International Patent Classification (IPC) or to both national classification and IPC

B. FIELDS SEARCHED

Minimum documentation searched (classification system followed by classification symbols)
C23C4/04, C03B23/03, C03B35/12, C22C29/06, C22C29/08, C23C4/06, C23C4/10

Documentation searched other than minimum documentation to the extent that such documents are included in the fields searched
Jitsuyo Shinan Koho        1922-1996    Jitsuyo Shinan Toroku Koho    1996-2011
Kokai Jitsuyo Shinan Koho  1971-2011    Toroku Jitsuyo Shinan Koho    1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2003-027175 A  (Fuji Die Co., Ltd.), 29 January 2003 (29.01.2003), claims; paragraphs [0013], [0015], [0018] (Family: none) | 1-12 |
| Y | JP 2008-075160 A  (Hitachi Tool Engineering Ltd.), 03 April 2008 (03.04.2008), claims; paragraphs [0007], [0009] to [0011] (Family: none) | 1-12 |
| Y | JP 04-175235 A  (Kubota Corp.), 23 June 1992 (23.06.1992), page 1, lower right column, lines 15 to 17; page 2, upper right column, lines 9 to 17; page 2, lower right column, lines 10 to 12 (Family: none) | 1-12 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 May, 2011 (11.05.11) | 24 May, 2011 (24.05.11) |

| Name and mailing address of the ISA/ | Authorized officer |
| --- | --- |
| Japanese Patent Office | |
| Facsimile No. | Telephone No. |

**INTERNATIONAL SEARCH REPORT**

International application No.

PCT/JP2011/056825

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-020126 A  (Tocalo Co., Ltd.),<br>23 January 2002 (23.01.2002),<br>claims; paragraphs [0032], [0036], [0037]<br>(Family: none) | 1-12 |
| Y | JP 55-058360 A  (Satosen Co., Ltd.),<br>01 May 1980 (01.05.1980),<br>claims; page 1, lower right column, line 13 to<br>page 2, upper left column, line 1; page 2,<br>lower left column, line 11 to lower right<br>column, line 4; table 1<br>(Family: none) | 1-12 |
| Y | JP 2001-207252 A  (Ishikawajima-Harima Heavy<br>Industries Co., Ltd.),<br>31 July 2001 (31.07.2001),<br>claims<br>(Family: none) | 1-12 |
| Y | JP 2007-230790 A  (Asahi Glass Co., Ltd.),<br>13 September 2007 (13.09.2007),<br>claims; paragraphs [0001] to [0003], [0018]<br>& EP 1826186 A2 | 12 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000178034 A
- JP 2002173758 A
- JP 2002220652 A
- JP 2010066500 A